# EUROPÄISCHE PATENTSCHRIFT

(11) **EP 3 344 721 B1**
(45) Veröffentlichungstag und Bekanntmachung des Hinweises auf die Patenterteilung: **06.11.2019**
(21) Anmeldenummer: 16760473.5
(22) Anmeldetag: 02.09.2016
(51) Int. Cl.: C09K 3/10, C08K 3/32

(54) **KORROSIONSINHIBIERENDE, RADIKALISCH AUSHÄRTBARE ZUSAMMENSETZUNG**
CORROSION INHIBITING, RADICALLY CURABLE COMPOSITION
COMPOSITION RADICALEMENT DURCISSABLE, INHIBITRICE DE CORROSION

(30) Priorität: 02.09.2015 EP 15183565
(43) Veröffentlichungstag der Anmeldung: 11.07.2018
(73) Patentinhaber: Sika Technology AG, 6340 Baar (CH)
(72) Erfinder: HAUFE, Markus, 8048 Zürich (CH); HUG, Max, 8135 Langnau a. Albis (CH); BAKALLI, Mirdash, 8046 Zürich (CH)
(74) Vertreter: Sika Patent Attorneys
(86) Internationale Anmeldenummer: PCT/EP2016/070710
(87) Internationale Veröffentlichungsnummer: WO 2017/037227

(56) Entgegenhaltungen:
- EP-A1- 1 518 892
- DE-A1- 3 611 307
- US-A- 4 508 569

## Beschreibung

### Technisches Gebiet

Die Erfindung betrifft eine korrosionsinhibierende, radikalisch polymerisierbare Zusammensetzung zum Abdichten von Fugen, Durchdringungen und anderen Undichtigkeiten insbesondere im Baubereich.

### Stand der Technik

Zum Füllen von Rissen, Fehlstellen und Hohlräumen bei Bauwerken und zum Abdichten von Fugen und Durchdringungen gegen das Eindringen von Feuchtigkeit sind verschiedenartige Materialen bekannt. Insbesondere werden Dichtmittel auf Basis von Polyurethanen, Epoxidharzen und (Meth)acrylaten eingesetzt. Für das Abdichten von Fugen und Durchdringungen sind quellbare Polymere weithin benutzt.

Quellbare Polymere sind Polymersysteme, die aus hydrophilen oder oleophilen Monomeren bestehen. Während der Polymerisationsreaktion bilden die Monomere makromolekulare Verbindungen, die der Lage sind, an ihren Seitenketten Flüssigkeit physikalisch anzulagern. Deswegen ist bei Flüssigkeitskontakt eines ausgehärteten quellfähigen Polymers eine starke Volumenzunahme (Quellen) zu beobachten. Beim Quellen baut das Polymer einen Anpressdruck gegenüber dem abzudichtenden Bauteil auf, wodurch eine Abdichtung gegenüber der anstehenden Flüssigkeit erzielt wird.

Radikalisch härtende Systeme sind in der Regel aus Monomeren wie Allyl-, Vinyl, Methacryl- und Acrylverbindungen aufgebaut. Die Polymerisationsreaktion beginnt, wenn die Monomere mit einem Radikalstarter physisch in Kontakt gebracht werden, entweder durch physikalisches Vermischen der Komponenten oder durch Verflüchtigung von einem Lösungsmittel. Bei der Herstellung von hydrophilen Systemen kommen Monomere oder Prepolymere zum Einsatz, die hydrophile Gruppen, beispielweise in Form von Hydroxy- oder Ammoniumgruppen, aufweisen. Hydrogele sind wasserenthaltende Gele, die aus Polymeren hydrophiler Verbindungen, z.B. (Meth)acrylmonomere, aufgebaut sind. In der Regel müssen die Polymere vernetzt sein, um stabile Hydrogele zu bilden.

Die Verwendung von quellfähigen Polymeren zum Abdichten von Undichtigkeiten ist als Stand der Technik bekannt.

JP62-129376 beschreibt eine Zusammensetzung zur Verhinderung von Undichtigkeiten von Abwasserkanälen. Die Zusammensetzung enthält ein (Meth)acrylat, insbesondere ein Magnesium- oder ein Natriumsalz davon, ein wasserlösliches Polyethylenglykol(meth)acrylat, das 20-30 Gew.-Prozent Mono(meth)acrylat-Einheiten enthalten kann, und einen Polymerisationskatalysator.

WO2007/071636 offenbart ein Mehrkomponenten-Quellpasten-Material bestehend aus hydrophilen oder oleophilen Monomeren oder Oligomeren, einen organischen Aktivator und einen organischen Radikalstarter. Das Quellpasten-Material soll eine geringe Aushärtezeit, eine gute Lagerfähigkeit und eine einfache Anwendbarkeit aufweisen.

EP2164881B1 offenbart ein Dichtmittel auf Basis von Polyethylenglykoldimethacrylaten mit einem gewichtsmittleren Molekulargewicht von mehr als 5000 g/mol. Das vorgeschlagene Dichtmittel soll eine verbesserte Quellbarkeit und eine erhöhte Bruchdehnung aufweisen.

EP1518892 offenbart eine Zusammensetzung enthaltend 268,38 Wasser, 8,68 g di-Natriumhydrogenphosphat x 12 H₂O (2,6 Gew.%), 48,35 g eines Monomerengemisches (davon 7,5 g wasserlöslich) und 1,05 g Ammoniumpersulfat. Weiterhin wird die Verwendung der Zusammensetzung in Fugendichtmassen offenbart.

DE3611307 offenbart eine Zusammensetzung für ein flüssiges Dichtmittel, enthaltend 45 Teile 2-Hydroxypropylmethacrylat, 0,2 Teile 10-prozentiger 2-Hydroxypropylmethacrylat-Lösung von Phosphorsäure, 0,3 Teile Cumolhydroperoxid und 1,5 Teile Wasser. Weiterhin wird der Einsatz von 0,1-5 Gewichtsanteilen eines Amins als Aushärtebeschleuniger in der Zusammensetzung offenbart.

US4508569 offenbart die Verwendung eines Phosphatsalzes in einer Dichtungszusammensetzung für Dosen, um einen pH-Wert von 9,5-10,5 einzustellen und Korrosion (Rost) zu verhindern.

Wasserbasierende quellfähige Polymere wie Poly(meth)acrylate werden seit vielen Jahren erfolgreich zum Abdichten von Fugen und Durchdringungen im Baubereich und zur Verpressung von Rissen in Stahlbetonbauwerken eingesetzt. Solche Systeme stehen aber aufgrund eher niedriger pH Werte in der Diskussion hinsichtlich einer möglichen Korrosionsgefahr für Bewehrungseisen in Stahlbetonbauten. Die aktuell kommerziell verfügbaren Dichtmittel auf Acrylat-Basis können die Korrosion von vorgeschädigtem Stahlbeton nicht verhindern. Deswegen sind hydrophile Systeme auf (Meth)acrylat-Basis in Deutschland nicht mehr für Rissinjektionen in Stahlbeton akzeptiert.

Vor diesem Hintergrund besteht ein Bedarf an wasserbasierten quellfähigen Polymeren, die einen korrosionsinhibierenden Effekt bezüglich Metall aufweisen und deswegen zum Abdichten von Stahlbetonbauwerken geeignet sind. Ein anderes Ziel der Erfindung ist es, ein wasserbasiertes Dichtmittel zur Verfügung zu stellen, das als Injektionsmittel zur Rissabdichtung geeignet ist. Das Dichtmittel soll auch eine möglichst geringe Viskosität, eine zutreffende Gelzeit als auch eine genügende Quellung besitzen.

### Darstellung der Erfindung

Aufgabe der Erfindung ist es daher, eine Zusammensetzung zum Abdichten von Fugen und Durchdringungen zur Verfügung zu stellen, welche die Nachteile des Stands der Technik überwindet.

Überraschenderweise wurde gefunden, dass eine Zusammensetzung gemäss Anspruch 1 diese Aufgabe löst. Vorteilhafte Ausführungsformen der Erfindung sind in den Unteransprüchen aufgeführt.

Entsprechend betrifft die vorliegende Erfindung eine Zusammensetzung zur Abdichtung von Fugen, Durchdringungen und anderen Undichtigkeiten insbesondere im Baubereich umfassend:
a) mindestens eine ethylenisch ungesättigte, radikalisch polymerisierbare wasserlösliche Verbindung,
b) mindestens einen Radikalstarter,
c) Wasser,
d) mindestens einen Korrosionsinhibitor umfassend mindestens ein Phosphat.

Ein Hydrogel erhältlich durch Polymerisation der erfindungsgemässen Zusammensetzung erfüllt die Bedingungen des Korrosionstests gemäss DIN EN 480-14, was bedeutet, dass mit dem Hydrogel ummantelter Bewehrungsstahl eine Passivierung zeigt und selbst bei Vorhandensein einer angelegten Potentialdifferenz keine Korrosionsphänomene zu beobachten sind. Die ausgehärtete erfindungsgemässe Zusammensetzung zeigt somit eine elektrochemische Verträglichkeit mit Stahlbetonstrukturen.

Ausserdem weist die erfindungsgemässe Zusammensetzung eine genügend niedrige Viskosität, einen zutreffenden Gelzeitbereich wie auch eine genügende Quellung auf, wodurch sie für verschiedene Abdichtungsapplikationen im Baubereich geeignet ist.

Die vorliegende Erfindung befasst sich zudem mit einem Verfahren zum Abdichten von Fugen, Durchdringungen und anderen Undichtigkeiten insbesondere im Baubereich gemäss Anspruch 11 sowie mit einem Verfahren zum Erstellen einer stahlpassivierenden Schicht in einem Hohlraum eines vorgeschädigten Stahlbetonbauwerkes gemäss Anspruch 12.

Die vorliegende Erfindung betrifft zudem auch eine Verwendung der erfindungsgemässen Zusammensetzung als Injektionsmittel gemäss Anspruch 13.

Zusätzlich betrifft die vorliegende Erfindung ein Hydrogel erhältlich durch Polymerisation der erfindungsgemässen Zusammensetzung gemäss Anspruch 14 und eine Verwendung des Hydrogels zum Abdichten von Fugen, Durchdringungen und anderen Undichtigkeiten insbesondere im Baubereich gemäss Anspruch 15.

Mit "eine polymerisierbare Verbindung" ist gemeint, dass die Verbindung unter Verwendung irgendeiner konventionellen synthetischen Methode bei Temperaturen im Bereich von -10 °C bis +60 °C polymerisiert werden kann.

Mit "eine wasserlösliche Verbindung" ist gemeint, dass die Verbindung eine derartige Wasserlöslichkeit aufweist, das sie bei 20 °C eine mindestens 5.0 Gew.-Prozentige, vorzugsweise mindestens eine 10.0 Gew.-Prozentige klare wässrige Lösung bilden kann. Besonders bevorzugt sind jedoch wasserlösliche Verbindungen, die bei Temperaturen zwischen -5 °C und +40 °C mit Wasser vollständig mischbar sind.

Die mindestens eine ethylenisch ungesättigte, radikalisch polymerisierbare Verbindung soll wasserlöslich und vernetzbar sein, so dass die Zusammensetzung bei Polymerisation und Vernetzung ein Hydrogel bildet. Ethylenisch ungesättigte, radikalisch polymerisierbare Verbindungen mit nur geringer Wasserlöslichkeit sind nicht geeignet, da sie sich nicht mit Wasser mischen und ihre Aushärtungsprodukte keine Hydrogele darstellen.

Mit "vernetzbar" ist gemeint, dass die Verbindungen während der Polymerisationsreaktion Makromoleküle bilden, die zu einem dreidimensionalen Netzwerk verknüpft sind. Die Verknüpfung kann entweder direkt beim Aufbau der Makromoleküle oder durch Reaktionen an bereits bestehenden Polymeren erreicht werden. Die Vernetzung kann in Gegenwart eines externen Vernetzungsmittels oder ohne externes Vernetzungsmittels durchgeführt werden. Vorzugsweise wird die Vernetzung ohne externes Vernetzungsmittel durchgeführt, wobei die Verbindung (Monomer, Prepolymer) ein selbstvernetzendes Polymersystem bildet.

Mit "ein Phosphat" ist ein Salz der Orthophosphorsäure (H₃PO₄) gemeint. Bei Salzen der Orthophosphorsäure sind die Wasserstoff-Ionen der Orthophosphorsäure vollständig oder teilweise durch Kationen ersetzt. Beispiele von Salzen der Orthophosphorsäure sind Alkali- und Erdalkalimetallsalze und Ammoniumsalze der Orthophosphorsäure.

Von der Bezeichnung "(Meth)Acryl" sind im Folgenden immer sowohl Methacryl- als auch Acryl erfasst. Entsprechend erfasst (Meth)acryloyl immer Methacryolyl oder Acryloyl. Eine (Meth)Acryloylgruppe ist auch bekannt als (Meth)Acrylgruppe. Eine (Meth)Acrylverbindung umfasst ein oder mehrere (Meth)Acryloylgruppen.

Ein "Hydrogel" ist ein wasserhaltiges Gel, das hydrophile Polymere enthält. Das Polymer kann vernetzt sein, zum Beispiel über kovalente Bindungen (ein chemisches Gel) oder durch nicht-kovalente Bindungen, d.h. ionische Wechselwirkungen oder Wasserstoffbrückenbindungen (ein physikalisches Gel).

Unter dem Begriff "offene Zeit" versteht man die Zeitspanne, in der die zusammen gemischten Bestandteile der polymerisierbaren Zusammensetzung verarbeitbar sind. Das Ende der offenen Zeit ist in der Regel mit einer Zunahme der Viskosität der Zusammensetzung verbunden, so dass eine Verarbeitung der Zusammensetzung nicht mehr möglich ist.

Unter dem Begriff "ein vorgeschädigtes Stahlbetonbauwerk" versteht man ein Stahlbetonbauwerk mit Fehlstellen. Bei den Fehlstellen handelt es sich um Risse und Löcher im Beton. Vorzugsweise ist in diesen Fehlstellen der Stahl nicht mehr (wie in ursprünglichen unbeschädigten Zustand) von Beton umgeben. Der Stahl kann sich in den Fehlstellen in einem korrodierten oder nicht korrodierten Zustand befinden.

Die ethylenisch ungesättigte, radikalisch polymerisierbare wasserlösliche Verbindung kann ein Monomer, ein Oligomer, ein Prepolymer oder ein Polymer sein. Die ethylenisch ungesättigte, radikalisch polymerisierbare wasserlösliche verbindung kann ein Molekulargewicht oder, wenn es sich um ein Oligomer, Prepolymer oder Polymer mit einer Molekulargewichtsverteilung handelt, ein Gewichtsdurchschnittsmolekulargewicht von nicht mehr als 12000 g/mol, vorzugsweise nicht mehr als 8000 g/mol und besonders bevorzugt nicht mehr als 4000 g/mol, aufweisen. Das zahlenmittlere Molekulargewicht kann durch Gelpermeationschromatographie (GPC) mit einem Polystyrolstandard bestimmt werden.

Es wurde auch gefunden, dass die korrosionsinhibierenden Eigenschaften der erfindungsgemässen Zusammensetzung besonders vorteilhaft sind, wenn das Gewichtsverhältnis der mindestens einen ethylenisch ungesättigten, radikalisch polymerisierbaren wasserlöslichen Verbindung zu Wasser im Bereich von 0.1:1 bis 3:1, bevorzugt im Bereich von 0.5:1 bis 1.5:1, liegt.

Bevorzugt weist die mindestens eine ethylenisch ungesättigte, radikalisch polymerisierbare wasserlösliche Verbindung einen Gewichtsanteil von 25 bis 65.0 Gew.-Prozent, bevorzugt von 35 bis 55 Gew.-Prozent bezogen auf das Gesamtgewicht der Zusammensetzung auf.

Bevorzugt umfasst die mindestens eine ethylenisch ungesättigte, radikalisch polymerisierbare wasserlösliche Verbindung mindestens eine wasserlösliche (Meth)Acrylverbindung. (Meth)Acrylverbindungen sind besonders geeignet für die vorliegende Erfindung, weil sie sich gut mit Wasser mischen und sich gut in wässeriger Lösung bei Temperaturen zwischen 5 °C und 40 °C polymerisieren lassen.

Wenn die mindestens eine ethylenisch ungesättigte, radikalisch polymerisierbare wasserlösliche Verbindung mehr als eine (Meth)Acrylverbindung enthält, ist der Gewichtsanteil der mindestens einen ethylenisch ungesättigten, radikalisch polymerisierbaren wasserlöslichen Verbindung basierend auf der Summe der Gewichte der einzelnen (Meth)Acrylverbindungen, kalkuliert.

Bevorzugt umfasst die Zusammensetzung mindestens eine wasserlösliche (Meth)Acrylverbindung umfassend eine (Meth)Acryloylgruppe und/oder mindestens eine wasserlösliche (Meth)Acrylverbindung umfassend zwei oder weitere (Meth)Acryolylgruppen.

Bevorzugt umfasst die mindestens eine wasserlösliche (Meth)Acrylverbindung ein hydroxyfunktionelles (Meth)Acrylat, eine carboxylfunktionalisierte (Meth)Acrylverbindung, ein Salz oder ein Anhydrid einer carboxylfunktionalisierten (Meth)Acrylverbindung, ein Polyether(meth)acrylat, ein Polyetherdi(meth)acrylat, ein (Meth)Acrylamid, ein (Meth)Acrylat umfassend eine quaternäre Stickstoffgruppe, ein (Meth)Acrylamid umfassend eine quaternäre Stickstoffgruppe oder eine Mischung davon.

Ein hydroxyfunktionelles (Meth)Acrylat ist ein (Meth)Acrylat umfassend eine oder mehrere Hydroxylgruppen.

Eine carboxylfunktionalisierte (Meth)Acrylverbindung ist eine (Meth)Acrylverbindung umfassend eine oder mehrere Carboxylgruppen, beispielsweise (Meth)Acrylsäure oder Methacrylate umfassend ein oder mehrere carboxylgruppen. Geeignete Beispiele von carboxylfunktionalisierten (Meth)Acrylverbindungen sind (Meth)Acrylsäure, Itaconsäure, Maleinsäure und Addukte des Hydroxyethylmethacrylats mit Anhydriden.

Geeignete Beispiele von Salzen der carboxylfunktionalisierten (Meth)Acrylverbindungen sind Salze der (Meth)Acrylsäure wie Natrium(meth)acrylat, Kalium(meth)acrylat und Magnesiumdi(meth)acrylat.

Polyether(meth)acrylat, und Polyetherdi-, tri-, tetra-, penta-, oder Hexa(meth)acrylat sind Polyether umfassend eine oder mehrere (Meth)Acrylatgruppen, wobei die (Meth)Acrylatgruppen vorzugsweise an den Enden der Polyethermolekülketten liegen. Der Polyether ist bevorzugterweise ein Polyethylenglykol (PEG), ein Methoxypolyethylenglykol (MPEG) oder ein Polyethylenglykol-Polypropylenglykol (PEG/PPG)- Copolymer, insbesondere ein Blockcopolymer.

Polyether(meth)acrylate und Polyetherdi(meth)acrylate umfassen auch Polyether mit einer oder zwei (Meth)Acrylatgruppen, wobei der Polyether ferner weitere Struktureinheiten wie beispielsweise Urethangruppen aufweist. Zu dieser Gruppe von Polyethern gehören Oligomere oder Prepolymere, die durch Umsetzung von Polyetherpolyolen erhalten werden, insbesondere Polyetherdiole oder Polyethermonoole, mit Verbindungen, die mindestens zwei funktionelle Gruppen enthalten, die gegenüber Hydroxylgruppen reaktiv sind, wie beispielsweise Polyisocyanate.

Beispielsweise können Polyether(meth)acrylate und Polyetherdi(meth)acrylate aus der Reaktion von Polyetherpolyolen oder Polyethermonoolen wie PEG, PEG/PPG-Copolymeren, MPEG oder MPEG/PPG-Copolymeren mit Polyisocyanaten erhalten werden um eine Isocyanatfunktionelle Verbindung zu erzeugen, wobei die resultierende Isocyanatverbindung danach mit einem hydroxyfunktionellen (Meth)acrylat wie Hydroxyethylmethacrylat umgesetzt wird. Im Falle von PEG/PPG Blockcopolymeren, soll der Gewichtsanteil an PEG bevorzugt mindestens 30 Gew.-Prozent sein, damit eine hinreichende Wasserlöslichkeit des Polyethers gegeben ist.

Beispiele von geeigneten Polyether(meth)acrylaten und Polyetherdi(meth)acrylaten sind PEG-di(meth)acrylate wie PEG 200 dimethacrylat, PEG 400 dimethacrylat, PEG 600 dimethacrylat, PEG 2000 dimethacrylat, MPEG-(meth)acrylate wie MPEG 350 (meth)acrylat, MPEG 550 (meth)acrylat, MPEG 1000 (meth)acrylat und MPEG 2000 (meth)acrylat.

Bevorzugt umfasst die Zusammensetzung keine Bestandteile, die Korrosion in wässerige Zusammensetzungen fördern können, beispielsweise Chloride. Bevorzugt weist der gesamte Gewichtsanteil der chloridenthaltenden Verbindungen weniger als 0.5 Gew.-Prozent, mehr bevorzugt weniger als 0.1 Gew.-Prozent bezogen auf das Gesamtgewicht der Zusammensetzung auf.

Bevorzugt umfasst die mindestens eine wasserlösliche (Meth)Acrylverbindung ein Hydroxy(meth)acrylat, welches bevorzugt aus der Gruppe bestehend aus Hydroxyethylacrylat (HEA), Hydroxyethylmethacrylat (HEMA), Hydroxypropylacrylat (HPA), Hydroxypropylmethacrylat (HPMA), Hydroxybutylacrylat (HBA) oder Hydroxybutylmethacrylat (HBMA) oder eine Mischung davon gewählt ist.

Bevorzugt umfasst die mindestens eine wasserlösliche (Meth)Acrylverbindung ein hydroxyfunktionelles (Meth)acrylat, eine Mischung umfassend ein hydroxyfunktionelles (Meth)acrylat und ein Salz einer carboxylfunktionalisierten (Meth)acrylverbindung oder eine Mischung umfassend ein hydroxyfunktionelles (Meth)acrylat und mindestens ein Polyether(meth)acrylat, bevorzugt MPEG-Methacrylat oder Polyetherdi(meth)acrylat.

Bevorzugt umfasst das mindestens eine Phosphat ein Alkalimetall-, ein Erdalkalimetall- oder ein Ammoniumsalz der Orthophosphorsäure. Alkalimetallsalze der Orthophosphorsäure sind bevorzugt, weil sie eine gute Verträglichkeit mit den anderen Bestandteilen der Zusammensetzung und eine gute Wasserlöslichkeit aufweisen.

Bevorzugt umfasst das mindestens eine Phosphat Kaliumdihydrogenphosphat (KH2PO4), Dikaliumhydrogenphosphat (K2HPO4) oder Kaliumphosphat (K3PO4) oder eine Mischung davon.

Bevorzugt weist das mindestens eine Phosphat einen Gewichtsanteil von 0.50-10.00 Gew.- Prozent, bevorzugt von 0.75-8.00 Gew.-Prozent, noch mehr bevozugt von 1.00-5.00 Gew.-Prozent bezogen auf das Gesamtgewicht der Zusammensetzung auf.

Wenn der mindestens eine Korrosionsinhibitor mehr als ein Phosphat enthält, ist der Gewichtsanteil des mindestens einen Phosphats basierend auf der Summe der Gewichte der einzelnen Phosphate kalkuliert.

Bevorzugt umfasst die Zusammensetzung zusätzlich mindestens ein Amin. Bevorzugt weist das mindestens eine Amin einen Siedepunkt von 255 °C oder darunter bei Normaldruck, also bei 1013,25 hPa auf.

Bevorzugt ist das mindestens eine Amin aus der Gruppe bestehend aus Ethanolamin, Dimethylaminoethanol, Methylethanolamin, N,N-Diethylethanolamin, 2-Amino-2-methyl-propanol, N-Butylethanolamin, Methyl-diisopropylamin, Methyldiethanolamin, Diisopropanolamin und 2-Amino-2-methyl-1,3-propandiol ausgewählt.

Es wurde überraschenderweise gefunden, dass, wenn die Zusammensetzung zusätzlich zu dem mindestens einen Phosphat mindestens ein Amin enthält, weniger Phosphat benötigt wird um die gleiche korrosionsinhibierende Wirkung zu erzielen. Zusätzlich wurde gefunden, dass erhöhte Phosphatmengen zu einer Verschlechterung der Absorbtionseigenschaften des Hydrogels führen. Andererseits wurde beobachtet, dass die Quelleigenschaften des Hydrogels bei höheren Mengen an Amin negativ beeinflusst werden, was die Abdichtungseigenschaften des Hydrogels deutlich verschlechtert.

Wenn der mindestens eine Korrosionsinhibitor mindestens ein Phosphat umfasst und die Zusammensetzung zusätzlich mindestens ein Amin umfasst, kann die Konzentration des Phosphats in der Zusammensetzung so eingestellt werden, dass das daraus resultierende Hydrogel einen optimalen Korrosionsschutz und gleichzeitig eine optimale Wasserabsorption und optimale Quelleigenschaften aufweist. Es kann auch vorteilhaft sein, dass das mindestens ein Amin als Beschleuniger für die Polymerisationsreaktion in der Zusammensetzung funktioniert.

Wenn die Zusammensetzung zusätzlich mindestens ein Amin umfasst, weist das mindestens eine Phosphat bevorzugt einen Gewichtsanteil von 0.10-5.00 Gew.- Prozent, mehr bevorzugt von 0.30-4.00 Gew.-Prozent und noch mehr bevorzugt von 0.50-3.00 Gew.-Prozent bezogen auf das Gesamtgewicht der Zusammensetzung auf.

Bevorzugt weist das mindestens eine Amin einen Gewichtsanteil von 1.00-10.00 Gew.- Prozent, mehr bevorzugt von 2.00-8.00 Gew.-Prozent, und noch mehr bevorzugt von 3.00-6.00 Gew.-Prozent bezogen auf das Gesamtgewicht der Zusammensetzung auf.

Das Molverhältnis des mindestens einen Phosphats zum mindestens einen Amin liegt bevorzugt im Bereich von 1:20 bis 1:1 und mehr bevorzugt im Bereich von 1:15 bis 1:5.

Bevorzugt liegt der gesamte Molanteil des mindestens einen Phosphats und des mindestens einen Amins im Bereich von 1.0 bis 15.0 Mol-Prozent, mehr bevorzugt im Bereich von 3.0 bis 10.0 Mol-Prozent.

Als Radikalstarter in der Zusammensetzung können bekannte Initiatoren für Radikalreaktionen, wie beispielsweise Alkalimetallpersulfate, Ammoniumpersulfate und Wasserstoffperoxide oder Azo-bis-isobutyronitril (AIBN) oder organische Peroxide wie Dibenzoylperoxid eingesetzt werden. Weil die erfindungsgemässe Zusammensetzung Wasser enthält, ist die Verwendung eines wasserlöslichen Radikalstarters in Form eines Alkalimetallpersulfats, Ammoniumpersulfats oder Hydroperoxids besonders bevorzugt.

Bevorzugt enthält die Zusammensetzung zusätzlich einen Beschleuniger für die Polymerisationsreaktion. Dieser Beschleuniger ist bevorzugt aus der Gruppe bestehend aus Übergangsmetallsalzen, Ascorbinsäure, Übergangsmetallkomplexe, und Amine, ausgewählt.

Wenn die Zusammensetzung mindestens ein Amin aufweist, ist das Beschleuniger aus der Gruppe bestehend aus Übergangsmetallsalzen, Ascorbinsäure, Übergangsmetallkomplexe, und weitere Amine, welche unterschiedlich von dem mindestens einen Amin ist, ausgewählt. Bevorzugt weist das weitere Amin ein Siedepunkt von höher als 255 °C bei Normaldruck, also bei 1013,25 hPa auf. Es kann auch vorteilhaft sein, dass das mindestens ein Amin als Beschleuniger für die Polymerisationsreaktion in der Zusammensetzung funktioniert und dass einen zusätzlichen Beschleuniger nicht benötigt ist.

Als Beschleuniger geeignete Amine sind insbesondere ausgewählt aus der Gruppe bestehend ausTrialkanolaminen, bevorzugt Triethanolamin, Diethanolamin, Amino(meth)acrylate, bevorzugt Dimethylaminoethylmethacrylat (DMAEMA) oder Dimethylaminopropylmethacrylat (DMAPMA), N,N-Dimethylanilin, N,N-Diethylanilin, N,N-Bis(hydroxyalkyl)aniline wie N,N-Bis(2-hydroxy-ethyl)anilin, N,N-Alkylhydroxyalkylaniline wie N-Ethyl-N-hydroxyethylanilin, N,N-Dimethyl-p-toluidin, N,N-Diethyl-p-toluidin, N-Methyl-N-hydroxyethyl-p-toluidin, N,N-Bis(2-hydroxyethyl)-p-toluidin sowie alkoxylierte N,N-Bis(hydroxyethyl)-p-toluidine, N-ethoxyliertes p-Toluidin, N,N-Bis(2-hydroxyethyl)-xylidin, N-Alkyl-morpholin und Mischungen davon.

Geeignete Übergangsmetallsalze und Übergangsmetallkomplexe sind beispielsweise Salze und Komplexe von Cobalt, Nickel, Kupfer, Mangan, Vanadium oder Eisen.

Eine angemessene Auswahl, welcher Beschleuniger verwendet wird, hängt im allgemeinen von dem jeweils verwendeten Radikalstarter ab. Dem Fachmann sind geeignete Kombinationen bekannt. Beispielsweise sind aromatische Aminen geeignete Beschleuniger für Dibenzoylperoxid, Übergangsmetallverbindungen sind geeignete Beschleuniger für organische oder anorganische Hydroperoxide und Ascorbinsäure und tertiäre Amine, wie Triethanolamin oder DMAPMA, sind geeignete Beschleuniger für Persulfatsalze.

Bevorzugt weist der mindestens eine Radikalstarter einen Gewichtsanteil von 0.05-2.00 Gew.- Prozent, mehr bevorzugt von 0.10-1.00 Gew.-Prozent bezogen auf das Gesamtgewicht der Zusammensetzung auf.

Bevorzugt weist der Beschleuniger einen Gewichtsanteil von 0.50-10.00 Gew.-Prozent, mehr bevorzugt von 1.00-7.00 Gew.-Prozent bezogen auf das Gesamtgewicht der Zusammensetzung auf.

Bevorzugt umfasst die Zusammensetzung zusätzlich mindestens eine Sulfonsäuregruppe umfassende, ethylenisch ungesättigte, radikalisch polymerisierbare wasserlösliche Verbindung, wie ein Sulfonsäuregruppen umfassendes (Meth)Acrylat, ein Salz oder ein Ester des Sulfonsäuregruppen umfassenden (Meth)Acrylats, ein Sulfonsäuregruppen umfassendes (Meth)Acrylamid oder eine Mischung davon.

Es wurde jedoch gefunden, dass eine zu hohe Konzentration der Acrylaminosulfonsäuren tendenziell zu überhöhten Quellungen von über 300 % führt, was für Abdichtungsapplikationen als nicht geeignet angesehen wird.

Zusätzlich kann die erfindungsgemässe Zusammensetzung einen Polymerisationsinhibitor enthalten. Kommerzielle Zusammensetzungen umfassend (Meth)Acrylverbindungen enthalten generell Polymerisationsinhibitoren um eine spontane Polymerisation zu vermeiden oder um die Polymerisationszeiten, beziehungsweise Reaktionszeiten anzupassen.

Zusätzlich zu den oben erwähnten Bestandteilen kann die erfindungsgemässe Zusammensetzung ein oder mehrere Hilfsmittel enthalten, die für diesen Bereich allgemein bekannt sind.

Beispiele von solchen Hilfsmitteln sind wässrige Polymerdispersionen oder Polymerlattices, wie Ethylen-Vinylacetat-Dispersionen oder Acrylatdispersionen, Farbstoffe, wasserlösliche Weichmacher oder Füllstoffe, wie Polyethylenglykole und wasserunlösliche Füllstoffe. Die Beimischung von letzteren Hilfsmitteln ist normalerweise nicht bevorzugt, weil die zusätzlichen Bestandteile negativ mit der Zusammensetzung wechselwirken können, besonders durch Sedimentation. In dieser Hinsicht ist der Füllstoff, falls benutzt, ein wasserunlöslicher Füllstoff mit einer Dichte im Bereich von 0.9 bis 1.1 g/ml. Bevorzugt weist der wasserunlösliche Füllstoff ein Löslichkeit von weniger als 2.0 g/100 g Wasser, mehr bevorzugt von weniger als 0.5 g/100 g Wasser, bei 20°C auf.

Bevorzugt liegt der gesamte Gewichtsanteil dieser Hilfsmittel im Bereich von 0.05 bis 30.0 Gew.-Prozent, mehr bevorzugt im Bereich von 0.10 bis 20.0 Gew.-Prozent bezogen auf das Gesamtgewicht der Zusammensetzung.

Es kann vorteilhaft sein, wenn die Zusammensetzung aus folgenden Bestandteilen besteht:
- mindestens eine ethylenisch ungesättigte, radikalisch polymerisierbare wasserlösliche Verbindung,
- mindestens ein Radikalstarter, vorzugsweise mit weiterhin mindestens einem Beschleuniger,
- Wasser,
- ein Korrosionsinhibitor umfassend mindestens ein Phosphat,
- gegebenenfalls Hilfsmittel, wobei der Anteil der Hilfsmittel weniger als 20.0 Gew.-Prozent, bevorzugt weniger als 10.0 Gew.-% und mehr bevorzugt weiniger als 5.0 Gew.-Prozent bezogen auf das Gesamtgewicht der Zusammensetzung, beträgt.

Vorzugsweise enthält die Zusammensetzung:
- mindestens eine wasserlösliche (Meth)Acrylverbindung, wobei der Anteil der mindestens einen wasserlöslichen (Meth)Acrylverbindung 25.0-65.0 Gew.-Prozent, insbesondere 35.0-55.0 Gew.-Prozent, bezogen auf das Gesamtgewicht der Zusammensetzung, beträgt,
- mindestens einen Radikalstarter, vorzugsweise mit weiterhin mindestens einem Beschleuniger,
- Wasser,
- einen Korrosionsinhibitor umfassend mindestens ein Phosphat, wobei der Anteil an Phosphat 0.15-10.00 Gew.- Prozent, insbesondere 1.00-5.00 Gew.-Prozent bezogen auf das Gesamtgewicht der Zusammensetzung, beträgt.

Vorzugsweise enthält die Zusammensetzung:
- mindestens eine wasserlösliche (Meth)Acrylverbindung ausgewählt aus der Gruppe bestehend aus Hydroxyethylacrylat (HEA), Hydroxyethylmethacrylat (HEMA), Hydroxypropylacrylat (HPA), Hydroxypropylmethacrylat (HPMA), Hydroxybutylacrylat (HBA) und Hydroxybutylmethacrylat (HBMA) oder eine Mischung davon, wobei der Anteil der mindestens einen wasserlöslichen (Meth)Acrylverbindung 25.0 bis 65.0 Gew.-Prozent, insbesondere 35.0-55.0 Gew.-Prozent, bezogen auf das Gesamtgewicht der Zusammensetzung, beträgt,
- mindestens einen Radikalstarter ausgewählt aus der Gruppe bestehend aus Alkalimetallpersulfat, Ammoniumpersulfat, Wasserstoffperoxid, Azo-bis-isobutyronitril (AIBN) und Dibenzoylperoxid, oder eine Mischung davon,
- mindestens einen Beschleuniger ausgewählt aus der Gruppe bestehend aus Übergangsmetallsalzen, Ascorbinsäure, Übergangsmetallkomplexe, und Amine,
- Wasser, wobei das Gewichtsverhältnis der mindestens einen wasserlöslichen (Meth)Acrylverbindung zu Wasser im Bereich von 0.1:1 bis 3:1, insbesondere in Bereich von 0.5:1 bis 1.5:1, liegt,
- mindestens einen Korrosionsinhibitor umfassend mindestens ein Phosphat gewählt aus der Gruppe bestehend aus Kaliumdihydrogenphosphat (KH₂PO₄), Dikaliumhydrogenphosphat (K₂HPO₄) oder Kaliumphosphat (K₃PO₄) oder eine Mischung davon, wobei der Anteil des Phosphats 0.10-5.00 Gew.- Prozent, insbesondere 0.50-1.50 Gew.-Prozent bezogen auf das Gesamtgewicht der Zusammensetzung, beträgt.

Bei Injektionsapplikationen sind möglichst niedrige Viskositäten unabdingbar, da die Zusammensetzungen über enge Zugänge an den gewünschten Applikationsort gebracht werden müssen und einen zu füllenden Hohlraum auch möglichst vollständig ausfüllen sollen. Dies gilt insbesondere für Rissabdichtungsanwendungen, bei denen sich das eingebrachte Material in sehr schmalen Spalten verteilen muss.

Die Zusammensetzung weist deshalb vorzugsweise eine Viskosität von weniger als 500 mPa·s, bevorzugt weniger als 200 mPa·s, und noch mehr bevorzugt weniger als 100 MPa·s auf, gemessen mit einem Brookfield-Viskositmeter bei 23°C.

Die Viskosität der Zusammensetzung ist am Anfang in der Regel relativ niedrig, da die Zusammensetzung hauptsächlich Wasser und wasserlösliche Inhaltsstoffe enthält. Die Viskosität kann eingestellt werden, beispielweise durch die Anpassung des Verhältnisses der mindestens einen ethylenisch ungesättigten, radikalisch polymerisierbaren wasserlöslichen Verbindung zu Wasser oder durch das Molekulargewicht der ethylenisch ungesättigten, radikalisch polymerisierbaren wasserlöslichen Verbindung.

Der pH-Wert der Zusammensetzung liegt bevorzugt vor der Polymerisationsreaktion im Bereich von 7.0 bis 13.0, noch mehr bevorzugt im Bereich von 8.0 bis 12.0.

Bevorzugt liegt die Gelzeit der Zusammensetzung bei einer Temperatur von 23 °C im Bereich von 30 s bis 90 min, mehr bevorzugt im Bereich von 1 min bis 70 min, noch mehr bevorzugt im Bereich von 5 min bis 60 min.

Die vorliegende Erfindung betrifft auch ein Verfahren zum Abdichten von Fugen, Durchdringungen und anderen Undichtigkeiten insbesondere im Baubereich, umfassend:
i) Erstellen einer erfindungsgemässen Zusammensetzung,
ii) Anbringen der Zusammensetzung an die abzudichtende Stelle, wo die Zusammensetzung polymerisiert und ein Hydrogel bildet.

Bevorzugt weist das Hydrogel eine Quellung von mehr als 0.0 %, mehr bevorzugt von mindestens 5.0 % und noch mehr bevorzugt von mindestens 10.0 % auf. Bei Abdichtungsapplikationen ist ein Hydrogel mit einer Quellung von weniger als 0 % nicht erwünscht, da solche Gele das Eindringen von Feuchtigkeit nicht verhindern können.

Die Bestandteile der erfindungsgemässen Zusammensetzung können in einer beliebigen Reihenfolge gemischt werden, um die erfindungsgemässe Zusammensetzung bereitzustellen. Der Mischschritt wird gewöhnlich durchgeführt, indem die Bestandteile durch Mischen oder Rühren miteinander gemischt werden. Geeignete Mittel zum Mischen sind statische Mischer, dynamische Mischer, insbesondere Behälter-Rührer-Typ Mischer wie Rotor-Stator-, Dissolver-, Kolloidal- und Butterfly-Mischer. Beispielsweise können die Bestandteile in einem statischen Mischer gemischt werden, wenn die offene Zeit der erfindungsgemässen Zusammensetzung relativ kurz ist, oder in einem Behälter-Rührer-Typ Mischer, wenn die offene Zeit relativ lang ist.

Nach dem Mischen der Bestandteile beginnt die Polymerisationsreaktion. Bevorzugt erfolgt die Polymerisation der Zusammensetzung bei Temperaturen im Bereich von 0 °C bis 60 °C, noch mehr bevorzugt im Bereich von 5°C bis 40 °C.

Der pH-Wert des Hydrogels liegt bevorzugt im Bereich von 7.0 bis 13.0, noch mehr bevorzugt im Bereich von 8.0 bis 12.0.

Der Füllschritt (Aufbringen der Zusammensetzung auf die abzudichtende Stelle) sollte bald nach Erstellung der Zusammensetzung begonnen werden und innerhalb der offenen Zeit der Zusammensetzung abgeschlossen sein. Alternativ können die Bestandteile der Zusammensetzung mit einem statischen oder dynamischen Mischer während des Füllschritts gemischt werden. In dem Füllschritt wird die Zusammensetzung auf eine abzudichtende Stelle aufgebracht, an der sie nach Polymerisation ein Hydrogel bildet. Die offene Zeit ist abhängig von den Bestandteilen der Zusammensetzung und deren Mengen.

Die vorliegende Erfindung betrifft auch ein Verfahren zum Erstellen einer stahlpassivierenden Schicht in einem Hohlraum eines vorgeschädigten Stahlbetonbauwerkes, umfassend:
i) Erstellen einer erfindungsgemässen Zusammensetzung,
ii) Einbringen der Zusammensetzung in einen Hohlraum des Stahlbetonbauwerkes, in dem die Zusammensetzung polymerisiert und eine stahlpassivierende Schicht in Form eines Hydrogels bildet.

Ein anderer Aspekt der vorliegenden Erfindung betrifft die Verwendung einer erfindungsgemässen Zusammensetzung als Injektionsmittel zur Abdichtung von Fugen, Durchdringungen und anderen Undichtigkeiten insbesondere im Baubereich, wobei die Zusammensetzung in einen Hohlraum eingespritzt wird.

Die Bestandteile der erfindungsgemässen Zusammensetzung werden vorzugsweise gelagert und als verwendungsbereites Kit in Form einer zwei oder mehr Komponenten enthaltenen Zusammensetzung an den Einsatzort gebracht. Die erforderliche Wassermenge wird unmittelbar vor der Applikation mit der Zwei- oder Mehrkomponentenzusammensetzung gemischt.

Die Zwei- oder Mehrkomponentenzusammensetzung kann, zum Beispiel, eine Komponente, die mindestens eine ethylenisch ungesättigte, radikalisch polymerisierbare wasserlösliche Verbindung und gegebenenfalls einen Beschleuniger, enthält, und eine andere Komponente, die einen Radikalstarter enthält, umfassen. Alternativ können die mindestens eine ethylenisch ungesättigte, radikalisch polymerisierbare wasserlösliche Verbindung, der Radikalstarter und der Beschleuniger, falls verwendet, als separate Komponenten in einer Mehrkomponentenzusammensetzung vorliegen.

Ein Teil der erforderlichen Wassermenge kann in einer oder mehreren Komponenten der Zwei- oder Mehrkomponentenzusammensetzung, enthalten sein. Es ist jedoch bevorzugt, dass höchstens 20.0 %, bevorzugt höchstens 5.0 % der gesamten Menge an Wasser in der Zwei- oder Mehrkomponentenzusammensetzung enthalten sind und, dass die Restwassermenge separat an den Einsatzort gebracht wird und mit der Zwei- oder Mehrkomponentenzusammensetzung gemischt wird. Somit können die Transportkosten deutlich reduziert werden.

Ein anderer Aspekt der vorliegenden Erfindung betrifft eine Zwei- oder Mehrkomponentenzusammensetzung umfassend alle Bestandteile der erfindungsgemässen Zusammensetzung, wobei die Menge von Wasser nicht mehr als 20.0 %, bevorzugt nicht mehr als 5.0 % der gesamten Menge an Wasser in der erfindungsgemässen Zusammensetzung, beträgt.

Der mindestens eine Korrosionsinhibitor kann in einer oder mehreren wasserhaltigen Komponenten der Zwei- oder Mehrkomponentenzusammensetzung, enthalten sein. Alternativ kann das mindestens ein Korrosionsinhibitor mit einem Teil der Restwassermenge gemischt werden.

Ein anderer Aspekt der vorliegenden Erfindung betrifft ein Vorprodukt zur Herstellung einer erfindungsgemässen Zusammensetzung. Das Vorprodukt enthält alle die Bestandteile der erfindungsgemässen Zusammensetzung, wobei der Gewichtsanteil an Wasser weniger als 1.0 Gew.-Prozent, bevorzugt weniger als 0.50 Gew.-Prozent, bezogen auf das Gesamtgewicht des Vorproduktes, aufweist. In der Herstellung der erfindungsgemässen Zusammensetzung wird dann die benötigte Menge von Wasser in das Vorprodukt hinzugefügt. Das Vorprodukt kann zwei- oder mehrere Komponenten umfassen, welche Komponenten zusammen mit der erforderlichen Wassermenge gemischt werden um die erfinderische Zusammensetzung zu erstellen.

Ein weiterer Aspekt der vorliegenden Erfindung betrifft ein Hydrogel erhältlich durch Polymerisation einer erfindungsgemässen Zusammensetzung.

Bevorzugt weist das Hydrogel eine Quellung von mehr als 0.0 %, mehr bevorzugt von mindestens 5.0 % und noch mehr bevorzugt von mindestens 10.0 % auf. Bei Abdichtungsapplikationen ist ein Hydrogel mit Quellung von weniger als 0 % nicht erwünscht, da solche Gele das Eindringen von Feuchtigkeit nicht verhindern können.

Der pH-Wert des Hydrogels liegt bevorzugt im Bereich von 7.0 bis 13.0, noch mehr bevorzugt im Bereich von 8.0 bis 12.0.

Ein weiterer Aspekt der vorliegenden Erfindung betrifft die Verwendung eines erfindungsgemässen Hydrogels zum Abdichten von Fugen, Durchdringungen und anderen Undichtigkeiten insbesondere im Baubereich.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Die folgenden Materialien wurden bei den Experimenten verwendet:

**Tabelle 1**

| | | |
|---|---|---|
| HEMA | Hydroxyethylmethacrylat (HEMA) umfassend 400 ppm Hydrochinonmonomethylether (HMME) als Polymerisationinhibitor | |
| Na-AMPS | Natriumsalz der AMPS® (2-Acrylamido-2-methylpropansulfonsäure), 50 %-ige Lösung in Wasser | AMPS® 2405 Monomer, Lubrizol |
| TEA | Triethanolamin (technische Qualität, 85%TEA / 15% Diethanolamin) | Triethanolamin 85, Ineos Oxide |
| NAPS | Natriumpersulfat (verdünnt mit Wasser zu einer 10 wt.% Lösung) | CAS # 7775-27-1 |
| KOH | Kaliumhydroxid | CAS # 1310-58-3 |
| Ethanolamin | | CAS # 141-43-5 |
| 2-Amino-2-methyl-1-propanol | | CAS # 124-68-5 |
| MDiPA | N-Methyldiisopropanolamin | CAS # 4402-30-6 |
| Dikalium hydrogenphosphat | | CAS # 7758-11-4 |
| Trikalium phosphat | | CAS # 7778-53-2 |
| Kalium dihydrogenphosphat | | CAS # 7778-77-0 |

### Bestimmung der relevanten Eigenschaften

Die Korrosionseigenschaften der Prüfzusammensetzungen wurden in einer Messanordnung gemäss der europäischen Norm EN 480-14 geprüft.

Für die Korrosionsexperimente wurden drei Probekörper von jeder getesteten Zusammensetzung hergestellt. Bei der Herstellung der Probekörper wurden Teflonformen mit darin eingesetzten Stahlelektroden mit den Prüfzusammensetzungen aufgefüllt. Nach Auspolymerisieren der Prüfzusammensetzungen wurden die resultierenden Hydrogele mit jeweils eingebetteter Stahlelektrode aus den Formen entfernt.

Beim anschliessenden Korrosionstest wurde an die Stahlelektrode des Probekörpers eine gleich bleibende Spannung, bezogen auf eine Referenzelektrode, angelegt. Die gewählte Spannung entspricht der Potentialdifferenz, die für Stahl in Beton beobachtet werden kann.

Alle schädlichen Einflüsse, die von der Zusammensetzung ausgehen, sind sofort erkennbar, da der induzierte Stromfluss durch fehlende Passivierung nicht zum Erliegen kommt, was zu einer zunehmenden anodischen Auflösung der Stahlelektrode führt.

Als Elektrolyt der Prüfzelle wurde eine gesättigte Calciumhydroxidlösung bei einer Temperatur von 20 °C verwendet.

Das Resultat der Korrionsprüfung ist entweder "Bestanden" oder "nicht Bestanden".

Die Viskosität der Zusammensetzung wurde bei 23°C vor der Polymerisationsreaktion mit einem Physica MCR101 Viskosimeter gemäß ISO 3219 mit einem koaxialen Zylindermesssystem bei einem Kegelwinkel von 120° bestimmt.

Die Gelierzeit ("Gelzeit") bei 23 °C wurde durch Sichtprüfung mit einem 40 g Ansatz der getesteten Zusammensetzung in einem Becher mit 4.5 cm Durchmesser bestimmt. Gelzeit entspricht der Zeit, bis visuell erste Gelstrukturen in der Reaktionslösung zu erkennen sind.

Für die Quellung in Wasser ("Quellung") wurden aus den wie vorgehend beschrieben hergestellten Prüfkörper Proben mit einer Dimension von 2.5 x 1.25 x 1.25 cm herausgeschnitten und bei 23°C in demineralisiertes Wasser eingelegt, so dass ein freies Quellen in dem Prüfmedium möglich ist. Die Gewichtsänderung der eingelagerten Prüfkörper wurde nach 3 d und 7 d Wasserlagerung gravimetrisch bestimmt. Die Aushärtezeit vor Wasserlagerung betrug 24 h.

### Beispiel 1

Die erfindungsgemässen Zusammensetzungen EX1 bis EX6 wurden durch Mischen der Bestandteilen, wie sie in Tabelle 2 ausgeführt sind, hergestellt. Die Gelzeit der erhaltenen Zusammensetzungen lag im Bereich von 3 bis 6 Minuten, wobei die Zusammensetzungen umfassend 2.0 Gew.-Prozent oder mehr an Phosphat den DIN EN 480-14 Korrosionstest bestanden, haben.

**Tabelle 2**

| **Experiment** | **EX 1** | **EX 2** | **EX 3** | **EX4** | **EX 5** | **EX 6** |
|---|---|---|---|---|---|---|
| **Bestandteil, Gew.-Prozent** | | | | | | |
| HEMA | 50 | 50 | 50 | 50 | 50 | 50 |
| Wasser | 36 | 37 | 35 | 37 | 35 | 37 |
| TEA (50%ig in Wasser) | 9 | 9 | 9 | 9 | 9 | 9 |
| NAPS (10%ig in Wasser) | 3 | 3 | 3 | 3 | 3 | 3 |
| DiKalium hydrogenphosphat | 2 | 1 | | | | |
| TriKalium phosphat | | | 3 | 1 | | |
| Kalium dihydrogenphosphat | | | | | 3 | 1 |
| Total, Gew.-% | 100 | 100 | 100 | 100 | 100 | 100 |

| **Ergebnisse** | | | | | | |
|---|---|---|---|---|---|---|
| Gelzeit (min) | 3 | 3 | 3 | 3.5 | 6 | 4 |
| pH Wert (durchschnittlich) | 10.1 | 10 | 11.7 | 10.9 | 8.0f/8.0n1h | 8.7frisch |
| Quellung 3d, [%] | 114 | 80 | 23 | 28 | 129 | 122 |
| Quellrate 7d, [%] | 150 | 97 | 9 | 22 | 140 | 131 |
| DIN EN 480-14 bestanden | **ja** | **nein** | **ja** | **nein** | **ja** | **nein** |
| Viskosität bei 23 °C, mPa·s | 5.0 | n.g. | 6.0 | n.g. | 5.0 | n.g |

| | | | | | | |
|---|---|---|---|---|---|---|
| n.g., nicht gemessen | | | | | | |

### Beispiel 2

Die erfindungsgemässen Zusammensetzungen EX7 bis EX11 wurden durch Mischen der Bestandteile, wie sie in Tabelle 3 ausgeführt sind, hergestellt. Die Gelzeit der erhaltenen Zusammensetzungen lag im Bereich von 3 bis 6 Minuten, wobei die Zusammensetzungen umfassend 1.0 Gew.-Prozent oder mehr Phosphat mit Alkanolaminen den DIN EN 480-14 Korrosionstest bestanden haben. Die Viskositäten der Zusammensetzungen liegen im Bereich von 5.0 mPa·s.

**Tabelle 3**

| **Experiment** | **EX 7** | **EX 8** | **EX 9** | **EX 10** | **EX 11** |
|---|---|---|---|---|---|
| **Bestandteil, Gew.-%** | | | | | |
| HEMA | 50 | 50 | 50 | 50 | 50 |
| Wasser | 34.5 | 34 | 32.5 | 32 | 31 |
| TEA (50%ig in Wasser) | 9 | 9 | 9 | 9 | 9 |
| NAPS (10%ig in Wasser) | 3 | 3 | 3 | 3 | 3 |
| Ethanolamin | 3 | 3 | 5 | 5 | |
| MDiPA | | | | | 6 |
| TriKalium phosphat | | | | | 4 |
| Kalium dihydrogenphosphat | 0.5 | 1 | 0.5 | 1 | 1 |
| Total, Gew.-% | 100 | 100 | 100 | 100 | 104 |

| **Ergebnisse** | | | | | |
|---|---|---|---|---|---|
| Gelzeit (min) | 6 | 5 | 4 | 4 | 3 |
| pH Wert (durchschnittlich) | 10.4 | 10.4 | 10.8 | 10.8 | 9.2 |
| Quellung 3d, [%] | 109 | 163 | 25 | 117 | 193 |
| Quellrate 7d, [%] | 113 | 206 | -4 | 194 | 228 |
| Konsistenz Gel | sehr weich | mittel | mittel | mittel | sehr weich |
| DIN EN 480-14 bestanden | **nein** | **ja** | **ja** | **ja** | **ja** |
| Viskosität bei 23 °C, mPa·s | n.g. | 5.0 | 5.0 | 5.0 | 6.0 |

| | | | | | |
|---|---|---|---|---|---|
| n.g., nicht gemessen | | | | | |

### Vergleichsbeispiele

Die Zusammensetzungen EX12 bis EX16 wurden durch Mischen der Bestandteile, wie sie in Tabelle 4 ausgeführt sind, hergestellt. Die Gelzeit der erhaltenen Zusammensetzungen lag im Bereich von 3 bis 5 Minuten. Keine von diesen Zusammensetzungen enthält einen Korrosionsinhibitor auf Phosphat-Basis und keine von diesen Zusammensetzungen hat den DIN EN 480-14 Korrosionstest bestanden.

**Tabelle 4**

| **Experiment** | **EX 12** | **EX 13** | **EX 14** | **EX 15** | **EX 16** |
|---|---|---|---|---|---|
| **Bestandteil, Gew.-%** | | | | | |
| HEMA | 50 | 50 | 50 | 50 | 50 |
| Wasser | 36 | 37 | 36 | 35 | 34 |
| TEA (50%ig in Wasser) | 9 | 9 | 7 | 7 | 7 |
| NAPS (10%ig in Wasser) | 3 | 3 | 3 | 3 | 3 |
| Ethanolamin | 2 | 1 | 4 | 5 | 6 |
| Total, Gew.-% | 100 | 100 | 100 | 100 | 100 |

| **Ergebnisse** | | | | | |
|---|---|---|---|---|---|
| Gelzeit (min) | 3 | 3.5 | 5 | 4.5 | 5 |
| pH Wert (durchschnittlich) | 10.7 | 10.5 | | | |
| Quellung 3d, [%] | 19 | 23 | -15 | -16 | -17 |
| Quellrate 7d, [%] | 0 | 15 | -17 | -17 | -17 |
| DIN EN 480-14 bestanden | **nein** | **nein** | **nein** | **nein** | **nein** |

## Patentansprüche

1. Zusammensetzung zur Abdichtung von Fugen, Durchdringungen und anderen Undichtigkeiten, insbesondere im Baubereich, umfassend:
a) mindestens eine ethylenisch ungesättigte, radikalisch polymerisierbare wasserlösliche Verbindung,
b) mindestens einen Radikalstarter,
c) Wasser,
d) mindestens einen Korrosionsinhibitor umfassend mindestens ein Phosphat,
wobei die mindestens eine ethylenisch ungesättigte, radikalisch polymerisierbare wasserlösliche Verbindung einen Gewichtsanteil von 25 bis 65 Gew.-Prozent, bevorzugt von 35 bis 55 Gew.-Prozent, bezogen auf das Gesamtgewicht der Zusammensetzung aufweist und wobei das mindestens ein Phosphat ein Alkalimetall- oder ein Erdalkalimetallsalz der Orthophosphorsäure, oder eine Mischung davon, umfasst.

2. Zusammensetzung nach Anspruch 1, wobei das Gewichtsverhältnis der mindestens einen ethylenisch ungesättigten, radikalisch polymerisierbaren wasserlöslichen Verbindung zu Wasser im Bereich von 0.1:1 bis 3:1, bevorzugt im Bereich von 0.5:1 bis 1.5:1, liegt.

3. Zusammensetzung nach einem der Ansprüche 1-2, wobei die mindestens eine ethylenisch ungesättigte, radikalisch polymerisierbare wasserlösliche Verbindung mindestens eine wasserlösliche (Meth)Acrylverbindung, bevorzugt ein Hydroxy(meth)acrylat, welches bevorzugt aus der Gruppe bestehend aus Hydroxyethylacrylat (HEA), Hydroxyethylmethacrylat (HEMA), Hydroxypropylacrylat (HPA), Hydroxypropylmethacrylat (HPMA), Hydroxybutylacrylat (HBA) oder Hydroxybutylmethacrylat (HBMA) oder eine Mischung davon ausgewählt ist, aufweist.

4. Zusammensetzung nach einem der Ansprüche 1-3, wobei das mindestens eine Phosphat ein Alkalimetall- oder ein Erdalkalimetallsalz der Orthophosphorsäure, bevorzugt Kaliumdihydrogenphosphat (KH₂PO₄), Dikaliumhydrogenphosphat (K₂HPO₄) oder Kaliumphosphat (K₃PO₄) oder eine Mischung davon, umfasst.

5. Zusammensetzung nach einem der Ansprüche 1-4, wobei das mindestens eine Phosphat einen Gewichtsanteil von 0.50-10.00 Gew.- Prozent, bevorzugt von 0.75-8.00 Gew.-Prozent und noch mehr bevorzugt von 1.00-5.00 Gew.-Prozent bezogen auf das Gesamtgewich der Zusammensetzung, aufweist.

6. Zusammensetzung nach einem der Ansprüche 1-4, wobei die Zusammensetzung zusätzlich mindestens ein Amin, bevorzugt ein Amin, welches aus der Gruppe bestehend aus Ethanolamin, Dimethylaminoethanol, Methylethanolamin, N,N-Diethylethanolamin, 2-Amino-2-methyl-propanol, N-Butylethanolamin, Methyl-diisopropylamin, Methyldiethanolamin, Diisopropanolamin und 2-Amino-2-methyl-1,3-propandiol oder eine Mischung davon ausgewählt ist, aufweist.

7. Zusammensetzung nach Anspruch 6, wobei das mindestens eine Phosphat einen Gewichtsanteil von 0.10-5.00 Gew.- Prozent, bevorzugt von 0.30-4.00 Gew.-Prozent und noch mehr bevorzugt von 0.50-3.00 Gew.-Prozent bezogen auf das Gesamtgewicht der Zusammensetzung, aufweist und wobei das mindestens eine Amin einen Gewichtsanteil von 1.00-10.00 Gew.-Prozent, bevorzugt von 2.00-8.00 Gew.-Prozent und noch mehr bevorzugt von 3.00-6.00 Gew.-Prozent bezogen auf das Gesamtgewicht der Zusammensetzung, aufweist.

8. Zusammensetzung nach einem der Ansprüche 1-5, wobei die Zusammensetzung zusätzlich mindestens einen Beschleuniger für die Radikalbildung umfasst, wobei der Beschleuniger eine Ascorbinsäure, ein Übergangsmetallsalz, einen Übergangsmetallkomplex, oder ein Amin, umfasst.

9. Zusammensetzung nach Anspruche 6 oder 7, wobei die Zusammensetzung zusätzlich mindestens einen Beschleuniger für die Radikalbildung umfasst, wobei der Beschleuniger eine Ascorbinsäure, ein Übergangsmetallsalz, einen Übergangsmetallkomplex, oder ein weiteres Amin, welches unterschiedlich von dem mindestens einen Amin ist, umfasst.

10. Zusammensetzung nach einem der Ansprüche 1-9, wobei der pH- Wert der Zusammensetzung im Bereich von 7.0 bis 13.0, bevorzugt im Bereich von 8.0 bis 12.0 liegt.

11. Verfahren zum Abdichten von Fugen, Durchdringungen und anderen Undichtigkeiten, insbesondere im Baubereich, umfassend:
i) Erstellen einer Zusammensetzung gemäss einem der Ansprüche 1-10,
ii) Anbringen der Zusammensetzung an die abzudichtende Stelle, wo die Zusammensetzung polymerisiert und ein Hydrogel bildet.

12. Verfahren zum Erstellen einer stahlpassivierenden Schicht in einem Hohlraum eines vorgeschädigten Stahlbetonbauwerkes, umfassend:
i) Erstellen einer Zusammensetzung gemäss einem der Ansprüche 1-10,
ii) Einbringen der Zusammensetzung in einen Hohlraum des Stahlbetonbauwerkes, in dem die Zusammensetzung polymerisiert und eine stahlpassivierende Schicht in Form eines Hydrogels bildet.

13. Verwendung einer Zusammensetzung gemäss einem der Ansprüche 1-10 als Injektionsmittel zur Abdichtung von Fugen, Durchdringungen und anderen Undichtigkeiten, insbesondere im Baubereich, wobei die Zusammensetzung in einen Hohlraum eingespritzt wird.

14. Hydrogel erhältlich durch Polymerisation einer Zusammensetzung gemäss einem der Anspüche 1-10.

15. Verwendung eines Hydrogels gemäss Anspruch 14 zum Abdichten von Fugen, Durchdringungen und anderen Undichtigkeiten, insbesondere im Baubereich.

16. Vorprodukt zur Herstellung einer Zusammensetzung gemäss einem der Ansprüche 1-10 umfassend alle Bestandteile der Zusammensetzung, wobei der Gewichtsanteil an Wasser weniger als 1.0 Gew.-Prozent bezogen auf das Gesamtgewicht des Vorproduktes, aufweist.

17. Vorprodukt nach Anspruch 16, wobei es eine Zwei- oder Mehrkomponentenzusammensetzung ist.

18. Eine Zwei- oder Mehrkomponentenzusammensetzung umfassend alle Bestandteile der Zusammensetzung gemäss einem der Ansprüche 1-10, wobei die Menge von Wasser nicht mehr als 20.0 %, bevorzugt nicht mehr als 5.0 % der gesamten Menge an Wasser in der Zusammensetzung gemäss einem der Ansprüche 1-10, beträgt.

19. Ein Verfahren zur Herstellung einer Zusammensetzung gemäss einem der Ansprüche 1-10 umfassend:
i) bereitstellen ein Vorprodukt gemäss dem Anspruch 16 oder 17,
ii) mischen des Vorprodukts mit einer solchen Menge von Wasser, dass in der resultierenden Zusammensetzung das Gewichtsverhältnis der mindestens einen ethylenisch ungesättigten, radikalisch polymerisierbaren wasserlöslichen Verbindung zu Wasser im Bereich von 0.1:1 bis 3:1, bevorzugt im Bereich von 0.5:1 bis 1.5:1, liegt.

## Claims

1. Composition for sealing joints, penetrations and other leak sources, especially in the construction sector, comprising:
a) at least one ethylenically unsaturated, free-radically polymerizable water-soluble compound,
b) at least one free-radical initiator,
c) water,
d) at least one corrosion inhibitor comprising at least one phosphate, wherein the at least one ethylenically unsaturated, free-radically polymerizable water-soluble compound has a proportion by weight of 25 to 65 percent by weight, preferably of 35 to 55 percent by weight, based on the total weight of the composition, and wherein the at least one phosphate comprises an alkali metal or alkaline earth metal salt of orthophosphoric acid, or a mixture thereof.

2. Composition according to Claim 1, wherein the weight ratio of the at least one ethylenically unsaturated, free-radically polymerizable water-soluble compound to water is in the range from 0.1:1 to 3:1, preferably in the range from 0.5:1 to 1.5:1.

3. Composition according to either of Claims 1-2, wherein the at least one ethylenically unsaturated, free-radically polymerizable water-soluble compound includes at least one water-soluble (meth)acrylic compound, preferably a hydroxy (meth)acrylate which is preferably selected from the group consisting of hydroxyethyl acrylate (HEA), hydroxyethyl methacrylate (HEMA), hydroxypropyl acrylate (HPA), hydroxypropyl methacrylate (HPMA), hydroxybutyl acrylate (HBA) and hydroxybutyl methacrylate (HBMA), or a mixture thereof.

4. Composition according to any of Claims 1-3, wherein the at least one phosphate comprises an alkali metal or alkaline earth metal salt of orthophosphoric acid, preferably potassium dihydrogenphosphate (KH₂PO₄), dipotassium hydrogenphosphate (K₂HPO₄) or potassium phosphate (K₃PO₄) or a mixture thereof.

5. Composition according to any of Claims 1-4, wherein the at least one phosphate has a proportion by weight of 0.50-10.00 percent by weight, preferably of 0.75-8.00 percent by weight and even more preferably of 1.00-5.00 percent by weight, based on the total weight of the composition.

6. Composition according to any of Claims 1-4, wherein the composition additionally includes at least one amine, preferably an amine selected from the group consisting of ethanolamine, dimethylaminoethanol, methylethanolamine, N,N-diethylethanolamine, 2-amino-2-methylpropanol, N-butylethanolamine, methyldiisopropylamine, methyldiethanolamine, diisopropanolamine and 2-amino-2-methylpropane-1,3-diol or a mixture thereof.

7. Composition according to Claim 6, wherein the at least one phosphate has a proportion by weight of 0.10-5.00 percent by weight, preferably of 0.30-4.00 percent by weight and even more preferably of 0.50-3.00 percent by weight, based on the total weight of the composition, and wherein the at least one amine has a proportion by weight of 1.00-10.00 percent by weight, preferably of 2.00-8.00 percent by weight and even more preferably of 3.00-6.00 percent by weight, based on the total weight of the composition.

8. Composition according to any of Claims 1-5, wherein the composition additionally comprises at least one accelerator for free-radical formation, wherein the accelerator comprises an ascorbic acid, a transition metal salt, a transition metal complex or an amine.

9. Composition according to Claim 6 or 7, wherein the composition additionally comprises at least one accelerator for free-radical formation, wherein the accelerator comprises an ascorbic acid, a transition metal salt, a transition metal complex or a further amine other than the at least one amine.

10. Composition according to any of Claims 1-9, wherein the pH of the composition is in the range from 7.0 to 13.0, preferably in the range from 8.0 to 12.0.

11. Method of sealing joints, penetrations and other leak sources, especially in the construction sector, comprising:
i) making up a composition according to any of Claims 1-10,
ii) applying the composition to the site to be sealed, where the composition polymerizes and forms a hydrogel.

12. Method of creating a steel-passivating layer in a cavity of a previously damaged reinforced concrete structure, comprising:
i) making up a composition according to any of Claims 1-10,
ii) introducing the composition into a cavity of the reinforced concrete structure, in which the composition polymerizes and forms a steel-passivating layer in the form of a hydrogel.

13. Use of a composition according to any of Claims 1-10 as injection medium for sealing joints, penetrations and other leak sources, especially in the construction sector, wherein the composition is injected into a cavity.

14. Hydrogel obtainable by polymerizing a composition according to any of Claims 1-10.

15. Use of a hydrogel according to Claim 14 for sealing joints, penetrations and other leak sources, especially in the construction sector.

16. Precursor for production of a composition according to any of Claims 1-10 comprising all constituents of the composition, wherein the proportion by weight of water is less than 1.0 percent by weight, based on the total weight of the precursor.

17. Precursor according to Claim 16, which is a two-component or multicomponent composition.

18. Two-component or multicomponent composition comprising all the constituents of the composition according to any of Claims 1-10, wherein the amount of water is not more than 20.0%, preferably not more than 5.0%, of the total amount of water in the composition according to any of Claims 1-10.

19. Process for producing a composition according to any of Claims 1-10, comprising:
i) providing a precursor according to Claim 16 or 17,
ii) mixing the precursor with such an amount of water that the weight ratio of the at least one ethylenically unsaturated, free-radically polymerizable water-soluble compound to water is in the range from 0.1:1 to 3:1, preferably in the range from 0.5:1 to 1.5:1.

## Revendications

1. Composition pour l'étanchéification de joints, de passages et d'autres défauts d'étanchéité, notamment dans le domaine du bâtiment, comprenant :
a) au moins un composé éthyléniquement insaturé, polymérisable par voie radicalaire, soluble dans l'eau,
b) au moins un démarreur radicalaire,
c) de l'eau,
d) au moins un inhibiteur de corrosion comprenant au moins un phosphate,
ledit au moins un composé éthyléniquement insaturé, polymérisable par voie radicalaire, soluble dans l'eau, présentant une proportion en poids de 25 à 65 pour cent en poids, de préférence de 35 à 55 % en poids, par rapport au poids total de la composition, et ledit au moins un phosphate comprenant un sel de métal alcalin ou de métal alcalino-terreux de l'acide orthophosphorique, ou un mélange de ceux-ci.

2. Composition selon la revendication 1, dans laquelle le rapport en poids entre ledit au moins un composé éthyléniquement insaturé, polymérisable par voie radicalaire, soluble dans l'eau, et l'eau se situe dans la plage allant de 0,1:1 à 3:1, de préférence dans la plage allant de 0,5:1 à 1,5:1.

3. Composition selon l'une quelconque des revendications 1 à 2, dans laquelle ledit au moins un composé éthyléniquement insaturé, polymérisable par voie radicalaire, soluble dans l'eau, comprend au moins un composé (méth)acrylique soluble dans l'eau, de préférence un hydroxy(méth)acrylate, qui est de préférence choisi dans le groupe constitué par l'acrylate d'hydroxyéthyle (HEA), le méthacrylate d'hydroxyéthyle (HEMA), l'acrylate d'hydroxypropyle (HPA), le méthacrylate d'hydroxypropyle (HPMA), l'acrylate d'hydroxybutyle (HBA) ou le méthacrylate d'hydroxybutyle (HBMA) ou un mélange de ceux-ci.

4. Composition selon l'une quelconque des revendications 1 à 3, dans laquelle ledit au moins un phosphate comprend un sel de métal alcalin ou de métal alcalino-terreux de l'acide orthophosphorique, de préférence le dihydrogénophosphate de potassium (KH₂PO₄), l'hydrogénophosphate de dipotassium (K₂HPO₄) ou le phosphate de potassium (K₃PO₄) ou un mélange de ceux-ci.

5. Composition selon l'une quelconque des revendications 1 à 4, dans laquelle ledit au moins un phosphate présente une proportion en poids de 0,50 à 10,00 pour cent en poids, de préférence de 0,75 à 8,00 pour cent en poids et de manière encore davantage préférée de 1,00 à 5,00 pour cent en poids, par rapport au poids total de la composition.

6. Composition selon l'une quelconque des revendications 1 à 4, dans laquelle la composition comprend en outre au moins une amine, de préférence une amine qui est choisie dans le groupe constitué par l'éthanolamine, le diméthylaminoéthanol, la méthyléthanolamine, la N,N-diéthyléthanolamine, le 2-amino-2-méthylpropanol, la N-butyléthanolamine, la méthyl-diisopropylamine, la méthyldiéthanolamine, la diisopropanolamine et le 2-amino-2-méthyl-1,3-propanediol ou un mélange de ceux-ci.

7. Composition selon la revendication 6, dans laquelle ledit au moins un phosphate présente une proportion en poids de 0,10 à 5,00 pour cent en poids, de préférence de 0,30 à 4,00 pour cent en poids et de manière encore davantage préférée de 0,50 à 3,00 pour cent en poids, par rapport au poids total de la composition, et dans laquelle ladite au moins une amine présente une proportion en poids de 1,00 à 10,00 pour cent en poids, de préférence de 2,00 à 8,00 pour cent en poids et de manière encore davantage préférée de 3,00 à 6,00 pour cent en poids, par rapport au poids total de la composition.

8. Composition selon l'une quelconque des revendications 1 à 5, dans laquelle la composition comprend en outre au moins un accélérateur pour la formation de radicaux, l'accélérateur comprenant un acide ascorbique, un sel de métal de transition, un complexe de métal de transition ou une amine.

9. Composition selon la revendication 6 ou 7, dans laquelle la composition comprend en outre au moins un accélérateur pour la formation de radicaux, l'accélérateur comprenant un acide ascorbique, un sel de métal de transition, un complexe de métal de transition ou une amine supplémentaire, qui est différente de ladite au moins une amine.

10. Composition selon l'une quelconque des revendications 1 à 9, dans laquelle le pH de la composition se situe dans la plage allant de 7,0 à 13,0, de préférence dans la plage allant de 8,0 à 12,0.

11. Procédé d'étanchéification de joints, de passages et d'autres défauts d'étanchéité, notamment dans le domaine du bâtiment, comprenant :
i) la préparation d'une composition selon l'une quelconque des revendications 1 à 10,
ii) l'application de la composition à l'emplacement à étanchéifier, où la composition polymérise et forme un hydrogel.

12. Procédé de préparation d'une couche de passivation de l'acier dans une cavité d'un ouvrage en béton armé pré-endommagé, comprenant :
i) la préparation d'une composition selon l'une quelconque des revendications 1 à 10,
ii) l'introduction de la composition dans une cavité de l'ouvrage en béton armé, dans laquelle la composition polymérise et forme une couche de passivation de l'acier sous la forme d'un hydrogel.

13. Utilisation d'une composition selon l'une quelconque des revendications 1 à 10 en tant qu'agent d'injection pour l'étanchéification de joints, de passages et d'autres défauts d'étanchéité, notamment dans le domaine du bâtiment, la composition étant injectée dans une cavité.

14. Hydrogel, pouvant être obtenu par polymérisation d'une composition selon l'une quelconque des revendications 1 à 10.

15. Utilisation d'un hydrogel selon la revendication 14 pour l'étanchéification de joints, de passages et d'autres défauts d'étanchéité, notamment dans le domaine du bâtiment.

16. Produit préliminaire pour la fabrication d'une composition selon l'une quelconque des revendications 1 à 10, comprenant tous les constituants de la composition, la proportion en poids d'eau étant inférieure à 1,0 pour cent en poids, par rapport au poids total du produit préliminaire.

17. Produit préliminaire selon la revendication 16, celui-ci étant une composition bi- ou multicomposante.

18. Composition bi- ou multicomposante comprenant tous les constituants de la composition selon l'une quelconque des revendications 1 à 10, dans laquelle la quantité d'eau n'est pas supérieure à 20,0 %, de préférence pas supérieure à 5,0 %, de la quantité totale d'eau dans la composition selon l'une quelconque des revendications 1 à 10.

19. Procédé de fabrication d'une composition selon l'une quelconque des revendications 1 à 10, comprenant :
i) la préparation d'un produit préliminaire selon la revendication 16 ou 17,
ii) le mélange du produit préliminaire avec une quantité d'eau telle que le rapport en poids entre ledit au moins un composé éthyléniquement insaturé, polymérisable par voie radicalaire, soluble dans l'eau, et l'eau dans la composition résultante se situe dans la plage allant de 0,1:1 à 3:1, de préférence dans la plage allant de 0,5:1 à 1,5:1.
